# EUROPEAN PATENT SPECIFICATION

(11) **EP 2 202 438 B1**
(45) Date of publication and mention of the grant of the patent: **05.03.2014**
(21) Application number: 10160204.3
(22) Date of filing: 21.03.2007
(51) Int. Cl.: F16L 15/04, F16L 58/18

(54) **Pipe coupling assembly wtih a protective ring**
Rohrkupplungsanordnung mit einem Schutzring
Ensemble raccord de tuyaux avec un anneau de protection

(30) Priority: 27.09.2006 US 528702; 29.09.2006 US 540939
(43) Date of publication of application: 30.06.2010
(62) Divisional of application: 07733561.0
(73) Proprietor: National Oilwell Varco, L.P., Houston, TX 77036 (US)
(72) Inventor: McLaughlin, Thomas, Kilpatrick, Balmedie,, Aberdeenshire AB23 8TW (GB)
(74) Representative: Lucas, Phillip Brian

(56) References cited:
- EP-A1- 1 197 686
- DE-A1- 2 048 569
- GB-A- 2 404 955
- GB-A- 2 407 352
- US-A- 1 889 868
- US-A- 4 875 713
- US-B1- 6 179 002

## Description

The present invention relates to a protective ring or gasket for use in a coupling assembly, to a coupling assembly comprising the protective ring, and to a method of coupling tubulars together using the coupling assembly.

Many tubulars are used to convey corrosive or erosive materials. Many piping systems and pipelines transport fluids that are highly corrosive to the carbon steel used in the pipe. In the drilling for and the production and injection of oil and gas, corrosion resistant alloy pipe, e.g., casing or tubing, is now used in the drilling of oil and gas wells into zones that produce highly corrosive fluids. To overcome corrosion problems, and as well known to those skilled in the art, it is common to use lined steel pipe, with liners made of plastic, stainless steel, or other corrosion resistant materials.

Certain typical multiple walled pipe, e.g. a lined steel pipe, is a dual or double walled pipe in which the inner wall is a liner tube made of a corrosion resistant material that serves as a conductor for the corrosive fluid, and an outer wall or pipe that is designed to provide strength to withstand the internal pressures of the corrosive fluid, as well as external forces such as external pressure, mechanical loading, etc. In certain tubulars, there are limitations on the length of such double walled pipes due to conditions to which the pipes are subjected on site. Thus, in the case of tubing or casing strings and in the production of oil and gas, each joint of pipe is usually about 7.32-13.41m (24-44 feet) long while the tubing or casing string itself may be thousands of feet long. Accordingly, and as is well known in making up such tubing or casing string, successive joints of tubing/casing are connected together using a coupling (or coupling assembly) until the desired length of string is achieved. Similarly in pipelines successive pieces of pipe are joined by couplings.

Typically, the coupling comprises an annular body for placement between and to which two tubulars may be connected. The annular body has a thread on its interior surface for receiving the thread on the end of the each of the tubulars. An annular gasket is positioned substantially centrally within and co-axial with the annular body. In use, each tubular comes into abutment with one side of the annular gasket as it is screwed into the annular body. An example of such a coupling assembly is shown in US-A-5 470 111.

It is desirable, where successive joints of the lined or clad pipe are joined to one another by means of a coupling that the interior of the coupling is protected from corrosion.

US-A-4,875,713 discloses a generic coupling comprising a collar for receiving internally coated threaded tubings or casings, the coupling having an integral locking ring and a seal ring of resilient material having an annular recess for receiving the integral locking ring. The seal ring comprises radial apertures to allow for escape of gases which may permeate through the resilient material and pressurize the space between the outer diameter of the seal ring and the internal face of the collar. The radial aperture will tend to close, but be forced open when pressure differential builds to allow pressure equalization across the seal ring.

US-A-1,889,868 discloses a pipe coupling used between joints of drill pipe in drilling operations, the coupling having two threaded joints threaded therein. A sleeve is arranged within the coupling member between ends of the drill pipe. The ends of the joints of drill pipe each abut copper seal rings arranged in opposing end rings with spring members linking them to a heavy central body of the sleeve. The spring member has rubber filler members thereabout to frictionally engage the coupling member to inhibit movement therebetween. The rubber filler members extrude in an annular space between the end rings and the coupling member (10) upon the spring members having pressure applied thereto. A set screw is used to inhibit rotation between the coupling and the sleeve.

In accordance with the present invention, there is provided a coupling assembly system comprising a coupling body of generally cylindrical shape with a channel therethrough, each end of said coupling body having a thread for threaded mating with a tubular so that the coupling assembly may provide a fluid connection between two tubulars, a protective ring comprising a ring body for positioning adjacent an interior wall of said coupling body between the two ends thereof and located for contact by said two tubulars, said ring body being generally cylindrical having an exterior surface and an interior surface and a ring channel therethrough, said protective ring comprising at least one concave area extending around at least a part of the circumference of said exterior of said ring body and at least one opening in at least one of the exterior and interior surfaces of said ring body characterised in that said protective ring has at least one further concave area on said interior surface of said ring body, such that, upon the tubulars being threaded into said coupling body, ends of the tubulars compress the protective ring urging the protective ring against the inner wall of the coupling body.

Preferably, the at least one opening is in the interior surface. Alternatively, or additionally, the at least one opening is in the exterior surface.

Advantageously, the at least one opening is at least one recess. Preferably, the recess further comprises an energizing member arranged in the at least one recess.

Preferably, the at least one concave area extends around substantially the whole of the circumference of the ring body.

Advantageously, the at least one concave area in the exterior surface comprises three spaced-apart areas, and the at least one concave area in the interior surface is two spaced-apart areas. Preferably, the protective ring further comprises: a plurality of energizing members in the protective ring, the three spaced-apart areas on the ring body's exterior comprising a first area, a second area, and a third area, a first energizing member of the plurality of energizing members located between the first area and the second area, a second energizing member of the plurality of energizing members located between the second area and the third area, the two spaced-apart areas on the ring body's interior comprising a fourth area and a fifth area, a third energizing member of the plurality of energizing members located between the fourth area and the fifth area, the protective ring having a first end and a second end, a fourth energizing member of the plurality of energizing members located between the first end and the fourth area, and a fifth energizing member of the plurality of energizing members located between the second end and the fifth area.

Preferably, the coupling assembly system further comprises the step of compressing the protective ring closes the opening, the ring body changing shape without a substantial change in volume.

Advantageously, the at least one opening is of sufficient size such that, when compressed between the two tubulars the ring body is inhibited from significant expansion into a flow path defined by the coupling assembly and the two tubulars.

In certain aspects, such a protective ring has two or more energizing members; and in one particular aspect such a protective ring has three spaced-apart energizing members located in recesses adjacent openings in the protective ring that provide for controlled compression of the protective ring and holding of the protective ring in position with respect to the coupling's interior wall. In another aspect there are five energizing members, two positioned in the protective ring adjacent an inner wall of a coupling member and three positioned in an inner wall of the protective ring.

Any protective ring according to the present invention may have one, two, three, four, five or more concave areas on the protective ring, on the protective ring's exterior and/or on the protective ring's interior to enhance directed controlled energizing of the protective ring into contact with a coupling member. In one particular aspect, such a protective ring has three concave portions on the protective ring's exterior and two concave portions on the protective ring's interior. Optionally, such a protective ring (with one - five or more concave areas) may have one - five or more energizing members. In certain aspects, in a protective ring with two (or more) spaced-apart concave areas on a side of a protective ring, an energizing member is located between two concave areas.

For a better understanding of the present invention reference will now be made, by way of example only, to the accompanying drawings, in which:
Fig. 1A is a side cross-section view of a coupling assembly in use with two tubulars;
Figs. 1B and 1C are plan views of the two components of the coupling assembly of Fig. 1A, shown separately for clarity;
Fig. 2A is a side cross-section view of another coupling assembly in use with two tubulars;
Fig. 2B is a side cross-section view of a coupling body part of the assembly of Fig. 2A;
Fig. 2C is a side cross-section view of a protective ring part of the assembly of Fig. 2A;
Fig. 2D is a side cross-section view of two tubulars prior to coupling with a coupling assembly;
Fig. 2E is a cross-section view of various energizing members;
Fig. 3A is a side cross-section view of part of a first protective ring;
Fig. 3B is a partial side view in cross-section of the protective ring of Fig. 3A in use with a coupling body forming a coupling assembly;
Figs. 3C to 3E show the coupling assembly of Fig. 3B in different stages of compression;
Fig. 4A is a side cross-section view of part of a first embodiment of a protective ring according to the present invention;
Fig. 4B is a side cross-section view of part of a second embodiment of a protective ring according to the present invention;
Fig. 4C is a side cross-section view of part of another protective ring;
Fig. 4D is a side cross-section view of part of another protective ring;
Fig. 4E is a side cross-section view of part of a third embodiment of a protective ring according to the present invention;
Fig. 5A is a side cross-section view of part of another protective ring;
Fig. 5B is a side cross-section view of part of another protective ring;
Fig. 5C is a side cross-section view of part of another protective ring;
Fig. 5D is a side cross-section view of part of another protective ring;
Fig. 6A is a top cross-section view of another protective ring;
Fig. 6B is a side view of the protective ring of Fig. 6A; and
Fig. 6C is a top cross-section view of another protective ring.

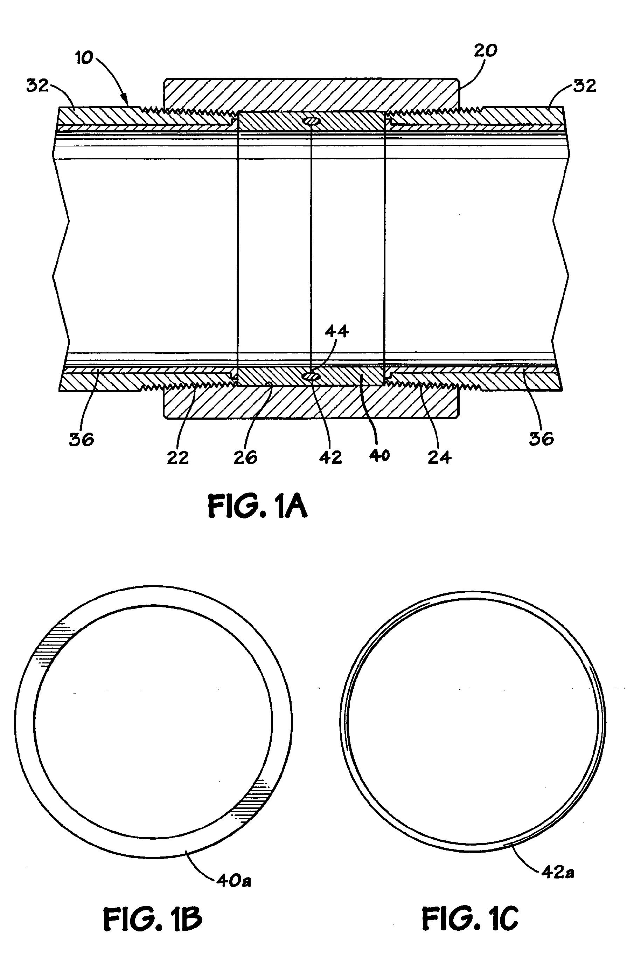

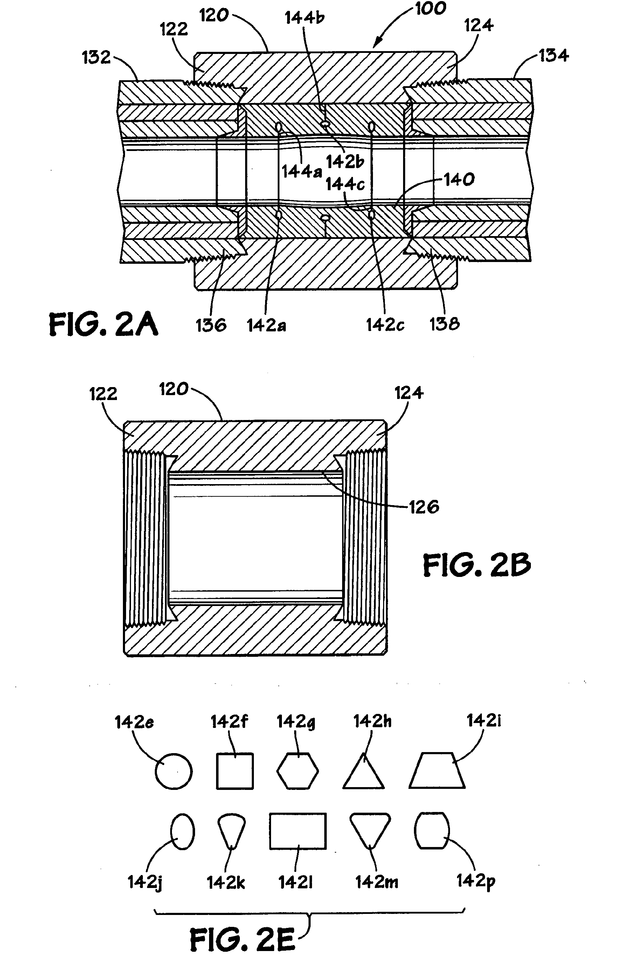

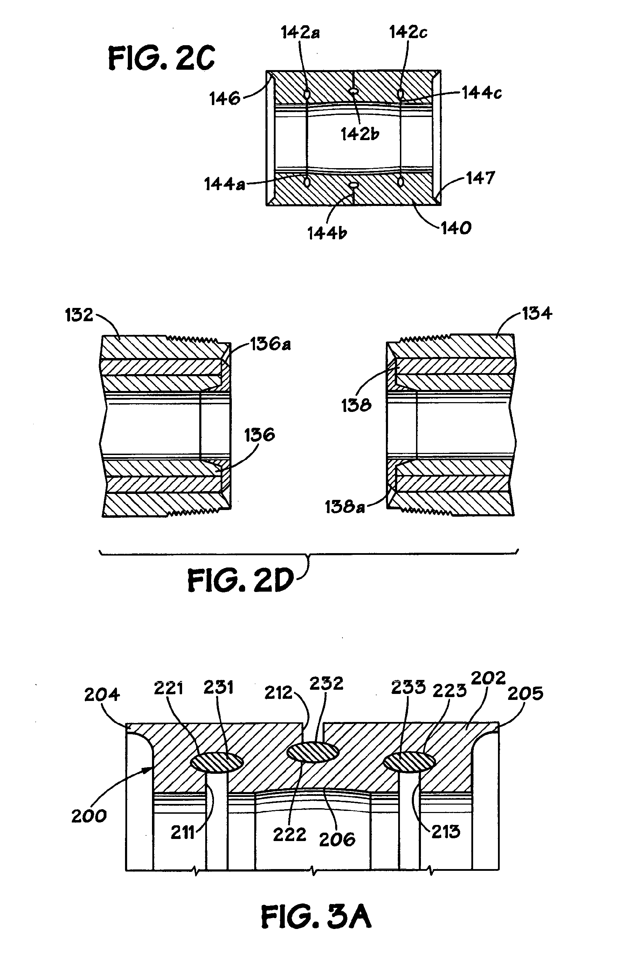

As shown in Fig. 1A, a coupling assembly 10 has a coupling member 20 which is a generally cylindrical hollow member with interiorly threaded spaced-apart ends 22, 24 and an interior wall 26. Two tubulars 32, 34 are threadedly connected to respective ends 22, 24 of the coupling member. Between ends of the two tubulars 32, 34 and adjacent the interior wall 26 of the coupling member 20 is a protective ring 40 (shown schematically) which is any protective ring. Optionally the tubulars 32, 34 have a liner 36 which may be any known tubular liner. Optionally, the protective ring 40 has one, two, three, four, five or more (one shown) energizing member 42. Optionally, a recess, slit, or opening 44 (or recesses or openings) (all referred to as "openings") leads from an exterior of the protective ring 40 to the energizing member(s) 42 which allow movement (e.g. axial movement of the protective ring) when compressive forces are applied to the protective ring without a change in volume of the protective ring but with controlled change in shape of the protective ring. Fig. 1B is a top (or bottom) view of one embodiments 40a of a protective ring 40. Fig. 1C is a top (or bottom) view of one embodiment 42a of a protective ring 42. The protective rings and energizing members of Figs. 2A, 2E and 3A are, similarly, items which are generally circular.

As shown in Figs. 2A-2D, a coupling assembly 100 has a protective ring 140 held in compression between the pin ends 136, 138 of the pipes 132, 134. Each pin end 136, 138 is threadedly secured in a respective end 122, 124 of a coupling member 120. The protective ring 140 has three spaced-apart openings 144a, 144b, and 144c, each of which extends interiorly from an exterior of the protective ring 140 and extends to an interior space which contains an energizing member 142a, 142b, 142c, respectively. Any energizing member shown herein may have any suitable cross-section shape, including but not limited to, those shown in Fig. 2E (shapes as follows: 142e, circular; 142f, square; 142g, hexagonal; 142h, triangular; 142i, trapezoidal; 142j, oval; 142k, teardrop; 1421, rectangular; 142m, teardrop; 142p, barrel).

Each pin end 136, 138 has an outer end bevel or taper 136a, 138a, respectively. Edge portions 146, 147 of the protective ring 140 are squeezed between an interior wall 126 of the coupling member 120 and the bevelled pin ends, thus assisting in securing the protective ring 140 in place adjacent the interior wall 126 of the coupling member 120.

It is possible for all energizing members of a protective ring (any disclosed herein) disclosed herein to be of the same or of different hardness. As shown in Fig. 2A, the two energizing members 142a, 142c are of the same hardness and the energizing member 142b is of a material harder than the material of the energizing members 142a, 142c. In one particular aspect, the energizing members 142a, 142c are made of a resilient elastomeric material, e.g., but not limited to, nitrile or butile; in certain aspects the members 142a, 142c with a hardness of about 70 durometer and the member 142b with a hardness of about 90 durometer. Any protective ring disclosed herein may have energizing members located further interiorly than other energizing members and of a hardness less than the other energizing members (e.g. other energizing members at an exterior wall of a protective ring).

In the coupling assembly 100, the protective ring 140 extends around the entire inner circumference of the coupling member 120 and the energizing members 142a, 142b, and 142c (and their corresponding openings 144a, 144b, 144c) extend around (and within) the entire circumference of the protective ring 140.

Fig. 3A shows a protective ring 200 (e.g. usable in the coupling assemblies of Figs. 1A and 2A). In certain particular aspects a body 202 of the protective ring 200 is made of compressible anti-corrosive material, e.g. elastomeric resilient material, polytetrafluoroethylene ("PTFE"), or a combination of elastomer and PTFE. Initially three openings 211, 212, and 213 extend from an exterior of the protective ring 200 to interior spaces 221, 222, 223, respectively, within the protective ring 200. Energizing members 231, 232, 233 are located within the interior spaces 221, 222, 223, respectively.

Optionally, the protective ring 200 has outer edges or "teeth" 204, 205.

The openings 211, 212, 213, the spaces 221, 222, 223 and the energizing members 231, 232, 233 extend around the entire generally cylindrical body 202 (which is like the protective rings 40 and 140 in general hollow cylindrical shape although only part of the protective ring 200 is shown in Fig. 3A). Optionally, the body 202 has a circumferential indentation 206 or concave area therearound.

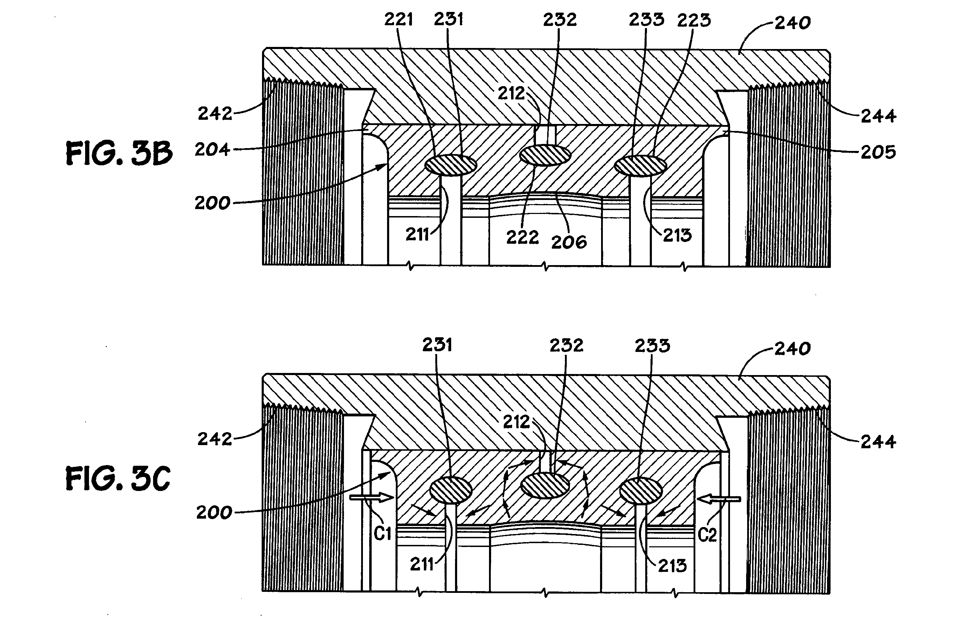

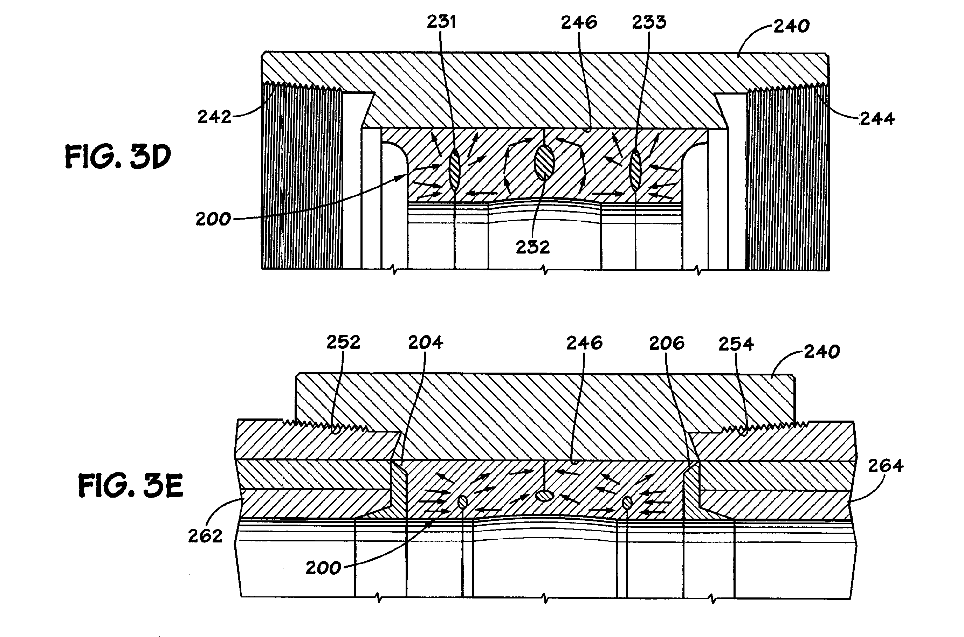

As shown in Fig. 3B, the protective ring 200 is positioned adjacent and installed inside a coupling member 240 (shown partially - shaped generally cylindrically as the coupling members 20 and 120 described above) having internally threaded ends 242, 244 for threadedly mating with externally threaded ends (e.g. the ends 252, 254 of pipes 262, 264, Fig. 3E).

As shown in Fig. 3C the protective ring 200 is being compressed (indicated by arrows. C1, C2), e.g. by pin ends of two tubulars to be connected together by the coupling 240. Since energizing members 231 and 233 are not as hard as the energizing member 232, the energizing members 231 and 233 move under compression before the energizing member 232, thus the protective ring 200 begins to move outwardly (toward the coupling member 240 as shown in Fig. 3C). The openings 211 and 213 begin to restrict and close. Then the opening 212 begins to restrict and close. The openings 211 - 213 provide space so that the protective ring 200 does not significantly expand into the flow path of the coupling member 240. The indentation 206 also facilitates the outward movement (toward the coupling member interior wall) of the protective ring 200 and provides an area or a void for protective ring material to flow to when the protective ring is compressing.

Fig. 3D illustrates the protective ring 200 fully compressed with the openings 211 - 213 closed and the energizing members 231 - 233 compressed (the members 231 - 233 have changed shape). The protective ring 200 has been forced against an interior wall 246 of the coupling member and, due to the openings 211 - 213, the indentation 206, and/or the entrapment of the two teeth 204, 205, the protective ring 200 has been biased outwardly and prevented from bowing inwardly so that the protective ring 200 is pressed up against the interior wall 246 along the length of the protective ring 200. The energizing members 231 - 233 are pushing the protective ring 200 against the coupling's interior wall.

As shown in Fig. 3E, the edges or teeth 204, 205 of the protective ring 200 have been trapped between tapered ends of the tubulars 262, 264 and part of the interior wall 246 of the coupling member 240, thus facilitating maintenance of the protective ring 200 in position to protect the interior wall 246.

With no adhesive or material between the interior wall 246 and the protective ring 200, and with the edges 204, 205 entrapped as described, either: corrosive fluid and/or material does not come into contact with the wall 246; or once such fluid and/or material does move between the wall 246 and the exterior of the protective ring 200 it is held there and its escape therefrom is inhibited or prevented. Thus, the wall 246 is exposed only to that amount of the material (and, in certain aspects only to the amount of oxygen in that amount of material) so that other corrosive material is inhibited or prevented from flowing into that space to corrode the wall 246 and so that a continuous flow of corrosive material is inhibited or prevented.

In certain aspects oil country tubular goods are made according to certain length tolerances, e.g. 3,18 mm (one-eighth inchh) plus or minus. By approximately sizing the openings (e.g. the openings 211 - 213) of a protective ring, this manufacturing tolerance can be accommodated. For example, for tubulars with a one-eighth inch manufacturing tolerance, if each opening (e.g. 211 - 213) is 16,8 mm (0.66 inches) for a total of about 5,08 mm (0.200 inches) (actually 5,03 mm (0.198 inches)) and the energizing members themselves (e.g. members 231 - 233) can be squeezed a total of another 1,27 mm (0.050 inches), a total of about 6,35 mm (0.250 inches) of compression is available, i.e., an amount equal to about the manufactuprotective ring tolerance of 3,18 mm (one-eighth inch) plus or minus (a total of 6,35 mm (one-fourth inch)).

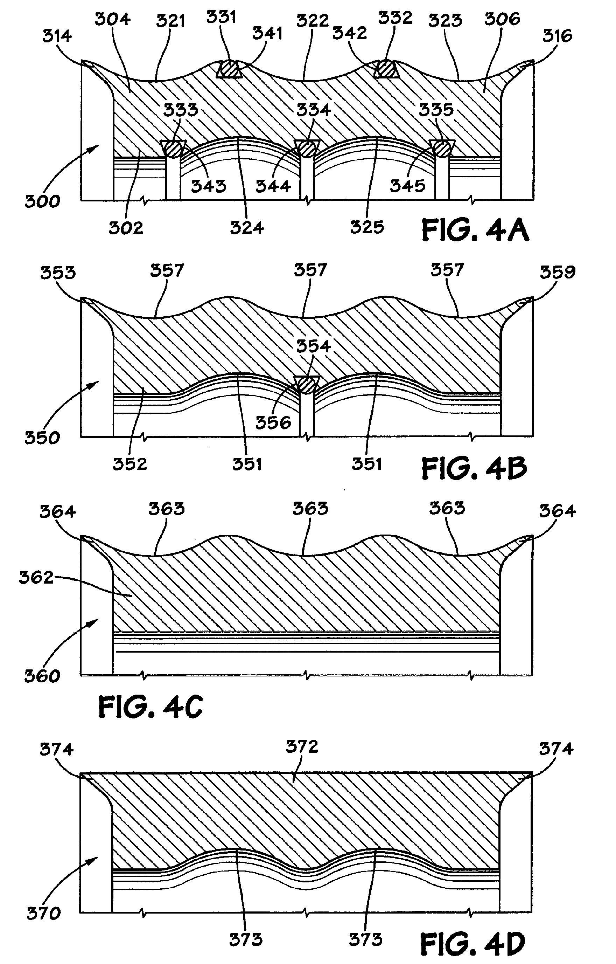

Fig. 4A shows a protective ring 300 according to the present invention useful in protecting a coupling member (e.g. a coupling member as in Figs. 1A, 2A, 3B or 3E). The protective ring 300 (only half is shown) has a body 302 with a first end 304 and a second end 306. Each end, optionally, has a projecting edge or tooth 314, 316, respectively which extends around the entire circumference of its respective circular end. A plurality of concave areas extend around the protective ring's circumference areas 321, 322, 323 on the protective ring's exterior surface and areas 324, 325 on the protective ring's interior surface. Two energizing members 331, 332 or held in corresponding recess 341, 342 on the protective ring's exterior surface and three energizing members 333, 334, 335 are held in corresponding recesses 343, 344, 345 on the protective ring's interior surface.

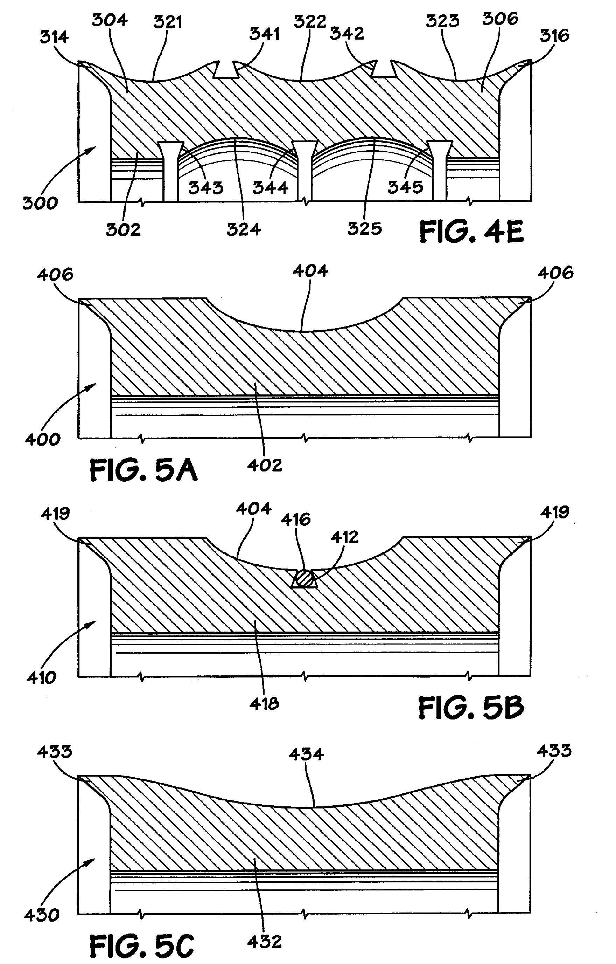

As shown in Fig. 4E, the energizing members are, in one aspect, omitted. Any one, some, or all of the recesses 341 - 345 may be omitted.

The edges or teeth 314, 316 can be trapped as described above for the edges 204, 205.

As shown in Fig. 4A, each energizing member 343, 344, 345 can be located opposite a concave area 321, 322, 323 (along with other forces) respectively, and, upon energizing force the concave areas outwardly.

Fig. 4B illustrates a protective ring 350 of the present invention, like the protective ring 300, but with only one energizing member 354 on an interior surface of a protective ring body 352. The energizing member 354 is in a recess 356 which is positioned between two concave areas 351. These concave areas 351 are on the body's exterior surface and the body 352 has two end edges or teeth 353, 359.

Fig. 4C shows a protective ring 360, like the protective ring 350, but without the concave areas 351. A body 362 has three concave areas 363 on the body's exterior surface. Optionally, there are end edges 364 at ends of the body 362. Optionally, any energizing member or members disclosed herein can be added to the protective ring 360.

Fig. 4D shows a protective ring 370, like the protective ring 350, but without energizing members. A body 372 has two concave areas 373 on the body's interior surface. Optionally, ends of the body 362 have edges 374. Optionally, any energizing member or members disclosed herein can be added to the protective ring 370.

Fig. 5A shows a protective ring 400 which is a generally cylindrical hollow member (only half shown). The protective ring 400 has a body 402 with a concave area 404 on its exterior surface. As with all the concave areas referred to above, the concave area 404 extends around the body of the protective ring. Optionally, as is true of any protective ring disclosed herein, the concave area(s) may be intermittent, a single pocket, or a series of spaced-apart distinct pockets. Ends of the body 402, optionally, have edges 406.

Fig. 5B shows a protective ring 410 which is like the protective ring 410 but which includes a recess 412 with an energizing member 416 therein. The protective ring 410 has a body 418 with a concave area 415 and with optional end edges 419.

Fig. 5C shows a protective ring 430 with a body 432 having optional end edges 433. A concave area 434 is on the body's exterior surface.

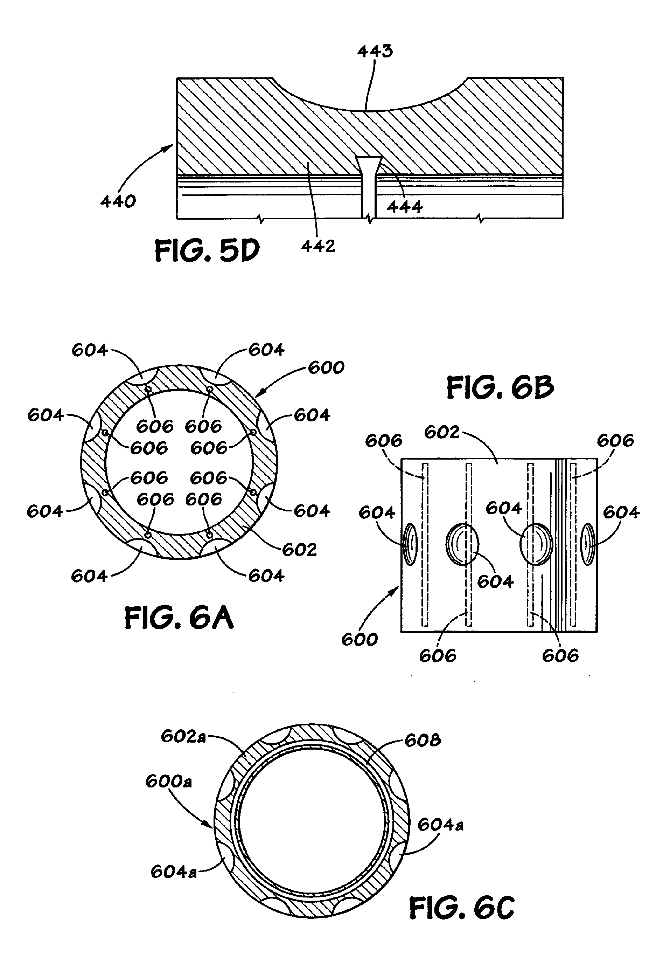

Fig. 5D shows a protective ring 440 with a body 442. The body 442 has a concave area 443 on its exterior and a recess 444 on its interior.

In any embodiment with intermittent concave areas, pocket, or pockets, if an energizing member is used, the energizing member may extend only so far as the area or pocket(s) or it may still extend uninterrupted around the protective ring's circumference.

Fig. 6A illustrates a protective ring 600 with a plurality of spaced-apart concave areas 604 in a body 602. Optionally energizing members 606 are adjacent each pocket. Alternatively, as shown in Fig. 6C, in a protective ring 600a, like the protective ring 600, an energizing member 608 can extend adjacent all pockets 604a in a body 602a.

The protective ring and coupling assembly of the present invention may find application in various fields including, but not limited to, coupling any clad or lined tubulars including oil and gas well tubing and casing, piping in chemical and other plants, oil and gas pipelines, etc.

## Claims

1. A coupling assembly system comprising a coupling body (20,120) of generally cylindrical shape with a channel therethrough, each end of said coupling body (20,120) having a thread (22,24) for threaded mating with a tubular (32,132,134) so that the coupling assembly (10,100) may provide a fluid connection between two tubulars (32,132,134), a protective ring comprising a ring body (300,350) for positioning adjacent an interior wall (26) of said coupling body (20,120) between the two ends thereof and located for contact by said two tubulars (32,132,134), said ring body (300,350) being generally cylindrical having an exterior surface and an interior surface and a ring channel therethrough, said protective ring comprising at least one concave area (321-325,357) extending around at least a part of the circumference of said exterior of said ring body (300,350) and at least one opening (341-345,356) in at least one of the exterior and interior surfaces of said ring body (300,350) **characterised in that** said protective ring has at least one further concave area (324,325,351) on said interior surface of said ring body (300,350), such that, upon the tubulars being threaded into said coupling body (20,120), ends of the tubulars (32,132,134) compress the protective ring urging the protective ring against the inner wall (26) of the coupling body (20,120).

2. A coupling assembly system as claimed in Claim 1, wherein said at least one opening (343-345,356) is in said interior surface.

3. A coupling assembly system as claimed in Claim 1, wherein said at least one opening (341-342,356) is in said exterior surface.

4. A coupling assembly system as claimed in Claim 1, wherein the at least one opening (341-345,356) is at least one recess.

5. A coupling assembly system as claimed in Claim 4, wherein said recess further comprises an energizing member (331-335,354) arranged in the at least one recess.

6. A coupling assembly system as claimed in any of Claims 1 to 5, wherein the at least one concave area extends around substantially the whole of the circumference of said ring body (300,350).

7. A coupling assembly system as claimed in any preceding claim, wherein said at least one concave area (321-323,357) in said exterior surface comprises three spaced-apart areas, and said at least one concave area (324,325,351) in said interior surface is two spaced-apart areas.

8. A coupling assembly system as claimed in claim 7, further comprising:
a plurality of energizing members (331-335) in the protective ring (300),
the three spaced-apart areas (321,322,323) on the ring body's exterior comprising a first area, a second area, and a third area,
a first energizing member (331) of the plurality of energizing members located between the first area and the second area,
a second energizing member (332) of the plurality of energizing members located between the second area and the third area,
the two spaced-apart areas (324,325) on the ring body's interior comprising a fourth area and a fifth area,
a third energizing member (334) of the plurality of energizing members located between the fourth area and the fifth area,
the protective ring having a first end and a second end,
a fourth energizing member (333) of the plurality of energizing members located between the first end and the fourth area, and
a fifth energizing member (335) of the plurality of energizing members located between the second end and the fifth area.

9. A coupling assembly system in accordance with any preceding claim, wherein the step of compressing the protective ring closes said opening (341-345;356), the ring body (300,350) changing shape without a substantial change in volume.

10. A coupling assembly system in accordance with Claim 9, wherein the at least one opening (144b,211,212,341-345;444) is of sufficient size such that, under compression between said two tubulars (32,132,134) said ring body (300,350) is inhibited from significant expansion into a flow path defined by said coupling assembly and said two tubulars.

## Patentansprüche

1. Kupplungsanordnungssystem, umfassend einen Kupplungskörper (20,120) von üblicherweise zylindrischer Form mit einem Kanal durch ihn hindurch, wobei jedes Ende des Kupplungskörpers (20,120) ein Gewinde (22,24) für eine Gewindeverbindung mit einem Rohr (32,132,134) hat, so dass die Kupplungsanordnung (10,100) eine Flüssigkeitsverbindung zwischen zwei Rohren (32,132,134) bereitstellen kann, einen Schutzring, umfassend einen Ringkörper (300,350) zum Positionieren benachbart zu einer Innenwand (26) des Kupplungskörpers (20,120) zwischen den beiden Enden davon und so angeordnet, dass er durch die beiden Rohre (32,132,134) berührt wird, wobei der Ringkörper (300,350) üblicherweise zylindrisch ist und eine Außenfläche und eine Innenfläche und einen Ringkanal durch ihn hindurch hat und wobei der Schutzring wenigstens einen konkaven Bereich (321-325,357) umfasst, der sich um mindestens einen Teil des Umfangs der Außenseite des Ringkörpers (300,350) und mindestens eine Öffnung (341-345,356) in mindestens einer der Außen- und Innenflächen des Ringkörpers (300,350) erstreckt, **dadurch gekennzeichnet, dass** der Schutzring mindestens eine weitere konkave Fläche (324,325,351) auf der Innenfläche des Ringkörpers (300,350) hat, so dass, wenn die Rohre in das Kupplungsgehäuse (20,120) geschraubt werden, die Enden der Rohre (32,132,134) den Schutzring komprimieren und so den Schutzring gegen die Innenwand (26) des Kupplungskörpers (20,120) drängen.

2. Kupplungsanordnungssystem nach Anspruch 1, wobei die mindestens eine Öffnung (343-345,356) in der Innenfläche ist.

3. Kupplungsanordnungssystem nach Anspruch 1, wobei die mindestens eine Öffnung (341-342,356) in der Außenfläche ist.

4. Kupplungsanordnungssystem nach Anspruch 1, wobei die mindestens eine Öffnung (341-345,356) zumindest eine Vertiefung ist.

5. Kupplungsanordnungssystem nach Anspruch 4, wobei die Aussparung ferner ein Antriebselement (331-335,354) umfasst, welches in der mindestens einen Vertiefung angeordnet ist.

6. Kupplungsanordnungssystem nach einem der Ansprüche 1 bis 5, wobei der mindestens eine konkave Bereich sich im Wesentlichen um den gesamten Umfang des Ringkörpers (300,350) erstreckt.

7. Kupplungsanordnungssystem nach einem der vorangehenden Ansprüche, wobei der zumindest eine konkave Bereich (321-323,357) in der Außenfläche drei voneinander beabstandete Bereiche umfasst, und der mindestens eine konkave Bereich (324,325,351) in der Innenfläche aus zwei beabstandeten Bereiche besteht.

8. Kupplungsanordnungssystem nach Anspruch 7, ferner umfassend:
eine Vielzahl von Antriebseiementen (331-335) in dem Schutzring (300),
die drei voneinander beabstandeten Bereiche (321,322,323) auf der Ringkörperaußenseite, die einen erstes Bereich, einen zweiten Bereich und einen dritten Bereich umfassen,
ein erstes Antriebselement (331) der Vielzahl von Antriebselementen, das zwischen dem ersten Bereich und dem zweiten Bereich angeordnet ist,
ein zweites Antriebselement (332) der Vielzahl von Antriebselementen, das zwischen dem zweiten Bereich und dem dritten Bereich angeordnet ist,
die zwei voneinander beabstandeten Bereiche (324,325) auf der Ringkörperinnenseite, welche einen vierten Bereich und einen fünften Bereich umfassen,
ein drittes Antriebselement (334) der Vielzahl von Antriebselementen, das zwischen dem vierten Bereich und dem fünften Bereich angeordnet ist,
der Schutzring mit einem ersten Ende und einem zweiten Ende,
ein viertes Antriebselement (333) der Vielzahl von Antriebselementen, das zwischen dem ersten Ende und dem vierten Bereich angeordnet ist, und
ein fünftes Antriebselement (335) aus der Vielzahl von Antriebselementen, das zwischen dem zweiten Ende und dem fünften Bereich angeordnet ist.

9. Kupplungsanordnungssystem nach einem der vorhergehenden Ansprüche, wobei der Schritt des Komprimierens des Schutzrings die Öffnung (341-345,356) schließt, wobei der Ringkörper (300,350) ohne wesentliche Volumenänderung die Form ändert.

10. Kupplungsanordnungssystem nach Anspruch 9, wobei die mindestens eine Öffnung (144b,211,212,341-444) von ausreichender Größe ist, so dass, unter Kompression zwischen den beiden Rohren (32,132,134) der Ringkörper (300,350) an einer signifikanten Erweiterung in einen Strömungspfad gehindert wird, der durch die Kupplungsanordnung und die zwei Rohre definiert wird.

## Revendications

1. Système d'ensemble de raccordement comportant un corps de raccordement (20, 120) de configuration généralement cylindrique doté à travers lui d'un canal, chaque extrémité dudit corps de raccordement (20, 120) présentant un filetage (22, 24) en vue d'un accouplement par filetage avec un élément tubulaire (32, 132, 134) de sorte que l'ensemble de raccordement (10, 100) puisse fournir un raccordement de fluide entre deux éléments tubulaires (32, 132, 134), un anneau de protection comportant un corps d'anneau (300, 350) permettant un positionnement adjacent à une paroi intérieure (26) dudit corps de raccordement (20, 120) entre ses deux extrémités et placé pour être en contact avec lesdits deux éléments tubulaires (32, 132, 134), ledit corps d'anneau (300, 350) qui est généralement cylindrique présentant une surface extérieure et une surface intérieure et un canal annulaire à travers lui, ledit anneau de protection comprenant au moins une zone concave (321-325, 357) s'étendant autour d'une partie au moins de la circonférence dudit extérieur dudit corps d'anneau (300, 350) et au moins une ouverture (341-345, 356) formée dans au moins l'une desdites surfaces intérieure et extérieure dudit corps d'anneau (300, 350), **caractérisé en ce que** ledit anneau de protection présente au moins une zone concave supplémentaire (324, 325, 351) sur ladite surface intérieure dudit corps d'anneau (300, 350) de telle sorte que, lors du vissage des éléments tubulaires dans ledit corps de raccordement (20, 120) les extrémités des éléments tubulaires (32, 132, 134) compriment l'anneau de protection en pressant l'anneau de protection contre la paroi intérieure (26) du corps de raccordement (20, 120).

2. Système d'ensemble de raccordement selon la revendication 1, dans lequel ladite au moins une ouverture (343-345, 356) se trouve dans ladite surface intérieure.

3. Système d'ensemble de raccordement selon la revendication 1, dans lequel la, au moins une, ouverture (341-342, 356) se trouve dans ladite surface extérieure.

4. Système d'ensemble de raccordement selon la revendication 1, dans lequel ladite au moins une ouverture (341-342, 356) se trouve au niveau d'au moins un évidement.

5. Système d'ensemble de raccordement selon la revendication 4, dans lequel ledit évidement comporte, de plus, un élément d'activation (331-335, 354) agencé dans le, au moins un, évidement.

6. Système d'ensemble de raccordement selon l'une quelconque des revendications 1 à 5, dans lequel la, au moins une, zone concave s'étend essentiellement autour de la totalité de la circonférence dudit corps d'anneau (300; 350).

7. Système d'ensemble de raccordement selon l'une quelconque des revendications précédentes, dans lequel ladite, au moins une, zone concave (321-323, 357) de ladite surface extérieure comporte trois zones séparées et dans laquelle ladite, au moins une, zone concave (324, 325, 351) de ladite surface intérieure est représentée par deux zones séparées.

8. Système d'ensemble de raccordement selon la revendication 7, comportant de plus :
une pluralité d'éléments d'activation (331-335) dans l'anneau de protection (300),
les trois zones séparées (321, 322, 323) sur l'extérieur du corps d'anneau constituant une première zone, une deuxième zone et une troisième zone,
un premier élément d'activation (331) de la pluralité des éléments d'activation placé entre la première zone et la deuxième zone,
un second élément d'activation (332) de la pluralité des éléments d'activation placé entre la deuxième zone et la troisième zone,
les deux zones séparées (324, 325) sur l'intérieur du corps d'anneau constituant une quatrième zone et une cinquième zone,
un troisième élément d'activation (334) de la pluralité des éléments d'activation placé entre la quatrième zone et la cinquième zone,
l'anneau de protection présentant une première extrémité et une seconde extrémité,
un quatrième élément d'activation (333) de la pluralité des éléments d'activation placé entre la première extrémité et la quatrième zone, et
un cinquième élément d'activation (335) de la pluralité des éléments d'activation placé entre la seconde extrémité et la cinquième zone.

9. Système d'ensemble de raccordement selon l'une quelconque des revendications précédentes dans lequel la phase de compression de l'anneau de protection ferme ladite ouverture (341-345, 356), le corps d'anneau (300, 350) changeant de configuration sans une variation substantielle de volume.

10. Système d'ensemble de raccordement selon la revendication 9 dans lequel la, au moins une, ouverture (144b, 211, 212, 341-345 ; 444) présente une dimension suffisante de sorte que, sous l'effet de la compression entre les deux dits éléments tubulaires (32, 132, 134) ledit corps d'anneau (300, 350) est empêché de s'étendre de façon significative selon une voie d'écoulement définie par ledit ensemble de raccordement et les deux dits éléments tubulaires.
